**Europäisches Patentamt**

**European Patent Office**

**Office européen des brevets**

(19)

(11) Veröffentlichungsnummer: **0 130 525**
**B1**

(12) # EUROPÄISCHE PATENTSCHRIFT

(45) Veröffentlichungstag der Patentschrift:
**16.09.87**

(51) Int. Cl.⁴: **A 47 J 47/01,** A 47 F 1/035

(21) Anmeldenummer: **84107286.1**

(22) Anmeldetag: **25.06.84**

(54) **Küchenschütten-Satz.**

(30) Priorität: **24.06.83 DE 8318330 U**

(43) Veröffentlichungstag der Anmeldung:
**09.01.85 Patentblatt 85/2**

(45) Bekanntmachung des Hinweises auf die Patenterteilung:
**16.09.87 Patentblatt 87/38**

(84) Benannte Vertragsstaaten:
**AT BE CH DE FR GB IT LI LU NL SE**

(56) Entgegenhaltungen:
**DE - A - 2 324 632**
**GB - A - 6 064**
**US - A - 1 615 438**
**US - A - 2 116 300**
**US - A - 3 361 299**
**US - A - 4 287 921**

(73) Patentinhaber: **Hense, Werner, Lehmkuhlstrasse 2,**
**D-4902 Bad Salzufen 1 (DE)**

(72) Erfinder: **Hense, Werner, Lehmkuhlstrasse 2, D-4902 Bad**
**Salzufen 1 (DE)**

(74) Vertreter: **Patentanwälte TER MEER - MÜLLER -**
**STEINMEISTER, Artur-Ladebeck-Strasse 51,**
**D-4800 Bielefeld 1 (DE)**

## Beschreibung

Die Erfindung betrifft einen Küchenschütten-Satz mit mehreren nebeneinander angeordneten Schütten mit Auslassventilen im Boden der Schütten und mit einer unterhalb der Schütten angeordneten und entlang der Reihe der Schütten verschiebbaren Wägeeinrichtung mit zu den Auslassventilen geöffnetem Wägebehälter.

Ein derartiger Küchenschütten-Satz ist aus der DE-A-23 24 632 bekannt. Küchenschütten werden verwendet zur Aufnahme von im Haushalt häufig benötigten schüttfähigen Nahrungsmitteln, wie Mehl, Zucker oder dergleichen. Üblicherweise sind die Schütten in einer Halterung in einem Küchenschrank oder an der Unterseite von Hängeschränken einer Einbauküche derart montiert, dass sie in Richtung der Tiefe des Schrankes aus der Halterung herausziehbar sind.

Häufig müssen von den in den Schütten untergebrachten Nahrungsmitteln vorgegebene Mengen abgewogen werden. Das Abwiegen erfolgt nach der DE-A-23 24 632 dadurch, dass die Nahrungsmittel durch Auslassventile im Boden der Schütten auf die Schale einer Waage herabgelassen werden, die unterhalb einer Reihe von Schütten quer verschiebbar angeordnet ist. Die Querverschiebung der Waage erfolgt auf dem Boden eines Küchen-Oberschrankes, auf dem Schienen oder Führungen befestigt werden.

Der Erfindung liegt die Aufgabe zugrunde, das Abwiegen des Inhalts der Schütten zu vereinfachen.

Diese Aufgabe wird erfindungsgemäss dadurch gelöst, dass die Wägeeinrichtung ein hängend an den Schütten verschiebbar befestigtes Gehäuse aufweist, das den Wägebehälter frei auf einer Waage stehend herausnehmbar aufnimmt.

Nach einer anderen Ausführungsform der Erfindung wird die gestellte Aufgabe dadurch gelöst, dass die Halteeinrichtung des Küchenschütten-Satzes eine Rückwand aufweist, in deren unterem Bereich eine waagerechte Schiene ausgebildet ist, in der eine Trägerplatte zur Aufnahme der Waage und über diese des Wägebehälters verschiebbar geführt ist.

Die Wägeeinrichtung, die unmittelbar an der Unterseite der Schütten oder an der Rückwand einer Halterung der Schütten geführt ist, kann in Abstand oberhalb einer Arbeitsplatte oder eines Schrankbodens angeordnet werden, so dass die Arbeitsfläche für andere Zwecke zur Verfügung steht.

Besondere Ausführungsarten der Erfindung sind in den abhängigen Ansprüchen 2–9 angegeben.

Bei einer bevorzugten Ausführungsform des Auslassventils ist eine im wesentlichen ebene Platte zum Verschliessen einer Öffnung der Schütten vorgesehen. Die Platte ist zusammen mit einer Welle derart drehbar, dass ihre verhältnismässig scharfkantigen unteren Längskanten über die Oberfläche des im Bereich der Öffnung bogenförmig ausgebildeten Bodens der Schütte streichen und das in der Schütte aufgenommene Material abstreifen.

Im folgenden werden bevorzugte Ausführungsbeispiele der Erfindung anhand der Zeichnungen näher erläutert.

Fig. 1 ist eine Frontansicht eines erfindungsgemässen Küchenschütten-Satzes;

Fig. 2 ist ein Schnitt längs der Linie II–II in Figur 1;

Fig. 3 ist ein Schnitt durch ein erfindungsgemässes Auslassventil im Boden einer Schütte;

Fig. 4 ist ein schematischer Querschnitt durch eine abgewandelte Ausführungsform einer Anordnung aus Halterung, Schütten und Wägeeinrichtung mit Behälter;

Fig. 5 ist ein schematischer Querschnitt durch eine abgewandelte Ausführungsform einer Schütte;

Fig. 6 ist ein Längsschnitt zu Figur 5;

Fig. 7 zeigt eine Draufsicht auf den Boden der Schütte gemäss Figur 5 und 6.

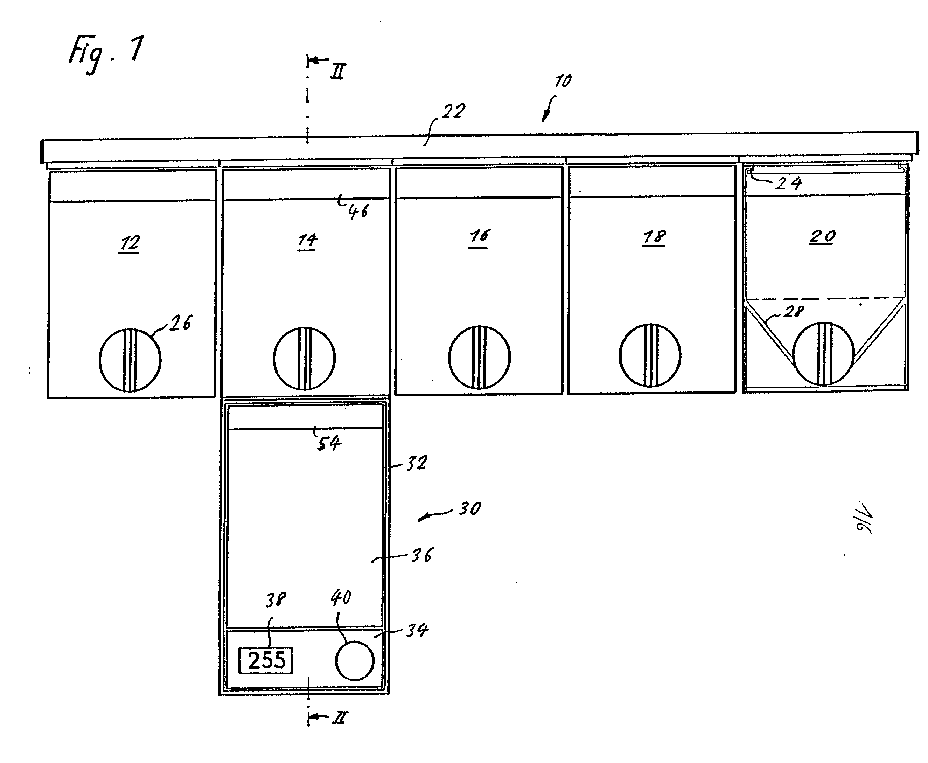

In Figur 1 ist ein erfindungsgemässer Küchenschütten-Satz 10 mit fünf Schütten 12, 14, 16, 18 und 20 dargestellt. Die Schütten sind hängend an einer Halterung 22 befestigt und zum Füllen mit Schüttgut in entsprechenden Führungen 24 nach vorn aus der Halterung herausziehbar.

Die Schütten 12 bis 20 sind jeweils an der Vorderseite mit einem Stellknopf 26 zur Betätigung eines hier nicht gezeigten Auslassventils im Boden der betreffenden Schütte versehen. Wie beispielhaft an der Schütte 20 veranschaulicht ist, fällt der Boden 28 der Schütte trichterförmig zu dem Auslassventil ab. Zur Entnahme des Schüttgutes wird der Stellknopf 26 der entsprechenden Schütte betätigt, so dass das Schüttgut durch das Auslassventil in einen unter die Schütte gehaltenen Behälter fällt. Der Durchsatz durch das Auslassventil ist dabei durch entsprechende Einstellung des Stellknopfes 26 nach Wunsch steuerbar. Auf diese Weise kann das Schüttgut entnommen werden, ohne dass die Schütte aus der Halterung herausgezogen werden muss.

Mit Vorteil bestehen die Schütten aus durchsichtigem Material oder sind zumindest mit einem Sichtfenster in der Vorderfront versehen, so dass sich der Füllstand und das Ausströmen des Schüttgutes durch das Auslassventil bequem überwachen lassen.

Der erfindungsgemässe Küchenschütten-Satz 10 umfasst ferner eine unterhalb der Schütten angebrachte Wägeeinrichtung 30. Im gezeigten Beispiel umfasst die Wägeeinrichtung 30 ein unmittelbar unter den Schütten hängendes und seitlich von einer Schütte zur anderen verschiebbares Gehäuse 32, das eine Waage 34 und eine lose auf deren Waagetisch aufgestellten Wägebehälter 36 aufnimmt. Die Waage 34 weist beispielsweise eine digitale Anzeige 38 und einen Bereichsschalter 40 auf.

Zum Abwiegen des Schüttgutes wird die Wägeeinrichtung 30 unter die betreffende Schütte, beispielsweise die Schütte 14 geschoben, und das Auslassventil wird geöffnet, so dass das Schüttgut unmittelbar in den Wägebehälter 36 fällt. Sobald die Anzeige 38 den gewünschten Wert anzeigt, wird das Auslassventil geschlossen.

Im gezeigten Beispiel stimmt die Breite der Wägeeinrichtung 32 mit der Breite der einzelnen Schütten überein. In der in Figur 1 gezeigten Position steht die Wägeeinrichtung lediglich mit der Schütte 14 in Eingriff und kann zusammen mit dieser aus der Halterung entnommen werden. Mit Vorteil wird die Wägeeinrichtung in der gezeigten Position und in entsprechender Position unter den anderen Schütten durch eine geeignete Rasteinrichtung stabilisiert.

Figur 2 zeigt einen senkrechten Schnitt durch die Schütte 14 und die Wägeeinrichtung 30 gemäss Figur 1. Die Halterung 22 ist beispielsweise unter dem Boden 42 eines Hängeschrankes oder an einer Wand 44 befestigt.

Die Schütte 14 ist an der Vorderseite mit einem Griff 46 versehen und weist nach unten über den trichterförmigen Boden 28 hinaus verlängerte Vorder- und Rückwände 48, 50 auf, die am unteren Ende Führungen 52 für das Gehäuse 32 bilden.

Das Gehäuse 32 ist oben und an der Vorderseite offen und steht verschiebbar mit den Führungen 52 in Eingriff. Der ebenfalls oben offene Wägebehälter 36 weist einen Griff 54 ähnlich dem Griff 46 der Schütten auf und ist durch die vordere Öffnung 56 des Gehäuses 32 entnehmbar. Der Wägebehälter stützt sich frei auf der den Waagetisch bildenden oberen Oberfläche der Waage 34 ab, so dass die Gewichtskraft des aus der Schütte in den Wägebehälter fallenden Schüttgutes auf die Waage 34 übertragen wird.

In Abwandlung des gezeigten Ausführungsbeispiels können an den Schütten vorzugsweise am unteren Ende Ansätze, Öffnungen oder sonstige Eingriffsorgane vorgesehen sein, die mit einer sämtliche Schütten unterfangenden Justierleiste in Eingriff bringbar sind. Hierdurch wird eine korrekte Ausrichtung der Schütten 12 bis 20 gewährleistet, so dass das Gehäuse 32 ungehindert von einer Schütte zur anderen verschiebbar ist. Wahlweise können die Führungen 52 auch ganz oder teilweise an der Justierleiste ausgebildet sein. Alternativ kann eine Ausrichtung der Schütten auch durch geeignete Rasteinrichtungen an der Halterung 22 erreicht werden, durch die Schütten in einer vorgegebenen Position in Auszugsrichtung festgelegt werden.

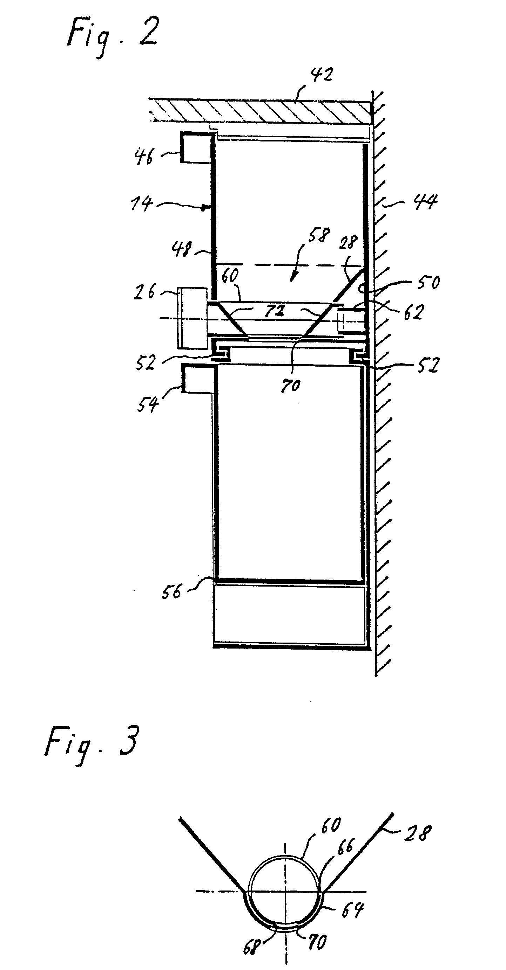

Gemäss Figur 2 umfasst das Auslassventil 58 ein Rohr 60, das an einem Ende mit dem Stellknopf 26 verbunden ist und am anderen Ende auf einem Zapfen 62 an der Rückwand 50 der Schütte gelagert ist. In Figur 3 ist das Rohr 60 zusammen mit einem Teil des Schütten-Bodens 28 im Schnitt dargestellt. Die Wand des Rohres 60 steht in dichtender Berührung mit einer halbkreisförmigen Rinne 64 in dem Boden 28 und weist eine sich über den halben Umfang des Rohres erstreckende Aussparung 66 sowie eine gegenüberliegende kleinere Aussparung 68 auf. In der Öffnungsstellung des Ventils fluchtet die kleinere Aussparung 68 mit einer Öffnung 70 in der Wand der Rinne 64, so dass das Schüttgut durch die Aussparungen des Rohres und die Öffnung 70 vollständig abfliessen kann. Der Durchgang durch die Aussparungen 66, 68 wird innerhalb des Rohrquerschnitts durch schräg, entsprechend der Trichterform des Bodens 28 verlaufende Wände 72 begrenzt. Wenn das Rohr 60 mit Hilfe des Stellknopfes 26 aus der in Figur 3 gezeigten Stellung gedreht wird, so wird die Öffnung 70 durch die Umfangswand des Rohres zunehmend verschlossen.

Die oben beschriebene Ausgestaltung des Auslassventils 58 ermöglicht eine feine Dosierung des Schüttgut-Durchsatzes, insbesondere während des Abwiegens, und gewährleistet zugleich, dass das Ventil jederzeit einwandfrei geschlossen werden kann und nicht durch sich verklemmende Schüttgut-Partikel blockiert wird.

Das Auslassventil kann jedoch auch in anderer Weise, beispielsweise als Schiebeventil ausgebildet sein.

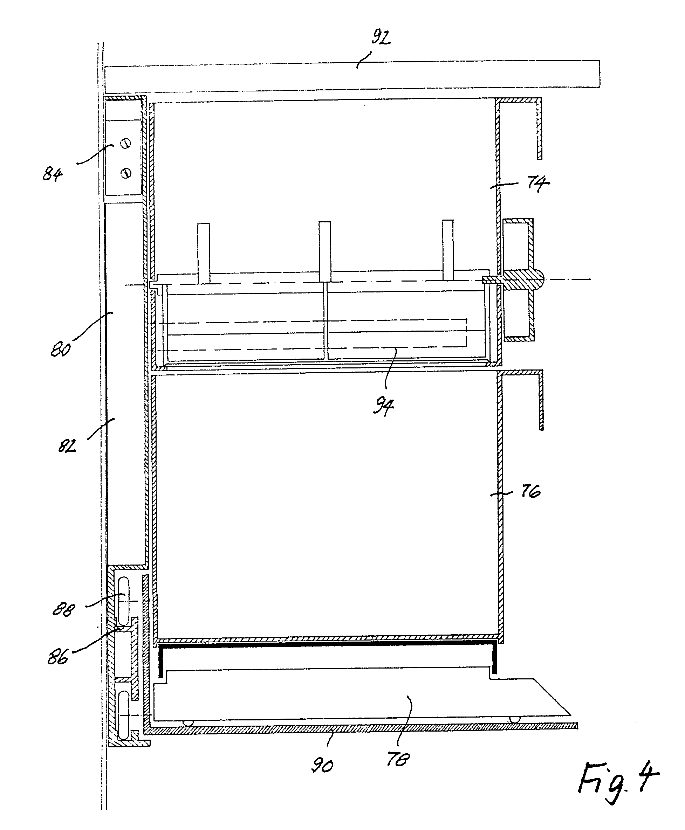

In Figur 4 sind in einem schematischen senkrechten Schnitt übereinander eine Schütte 74, ein Wägebehälter 76 und eine Waage 78 gezeigt. Die Anordnung entspricht im wesentlichen den zuvor beschriebenen Ausführungsformen, jedoch ist in Figur 4 eine andere Halterung 80 für die Anordnung vorgesehen. Die Halterung 80 weist eine Rückwand 82 auf, die mit Ösen 84 zur Befestigung an einer Wand einer Küche versehen ist. Im unteren Bereich der Rückwand 82 befindet sich eine waagerechte Schiene 86, die einen entsprechend gestalteten Läufer 88 verschiebbar aufnimmt, der sich an der Rückseite einer Trägerplatte 90 befindet. Die Trägerplatte 90 dient als Stellfläche für die Waage 78. In diesem Falle ist also, wie oben bereits angedeutet wurde, die Waage nicht unter den Schütten aufgehängt, sondern in anderer Weise verschiebbar unterhalb der Reihe der Schütten geführt.

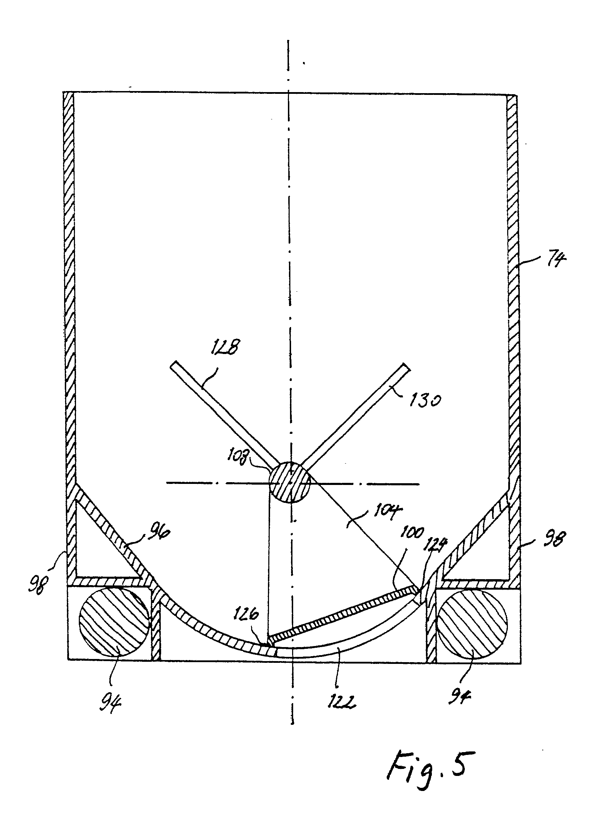

Die Schütten 74 können an der Unterseite einer vom oberen Ende der Rückwand 82 ausgehenden, nach vorne vorspringenden Abdeckplatte 92 geführt sein, wie es bereits in Bezug auf die Halterung 22 beschrieben wurde. Die Abdeckplatte 92 kann jedoch vollständig entfallen, sofern die Schütten 74 in anderer Weise an der Rückwand 82 aufgehängt sind. In Figur 4 ist gestrichelt ein Zapfen 94 gezeigt, der von der Rückwand 82 ausgeht. Gemäss Figur 5 dienen jeweils zwei Zapfen 94 dazu, eine Schütte 74 von unten abzustützen. Gemäss Figur 5 weisen die Schütten 74 in der bereits beschriebenen Weise einen schräg nach unten zusammenlaufenden Boden 96 auf, so dass unterhalb der Abschrägung freie Räume für die Aufnahme der Zapfen 94 entstehen. Zur zusätzlichen Führung der Schütten sind die in Figur 5 nicht bezeichneten Seitenwände der Schütten nach unten durch stufenförmig zurückspringende Schürzen 98 verlängert.

Figur 5, 6 und 7 zeigen im übrigen Einzelheiten einer abgewandelten Entnahmevorrichtung einer Schütte. Bei der im Zusammenhang mit Figur 3 beschriebenen Entnahmevorrichtung, bei der die Oberfläche des drehbaren Rohres 60 bei dessen Drehung auf der Innenfläche der halbkreisförmigen Rinne 64 gleitet, können Schwierigkeiten mit Materialien entstehen, die entweder zum Zusammenbacken neigen, wie es etwa bei Mehl der Fall ist, oder die eine ausgeprägt körnige Struktur besitzen und starke Kratzgeräusche bei der Drehung des Rohres verursachen, wie etwa Zucker oder Salz.

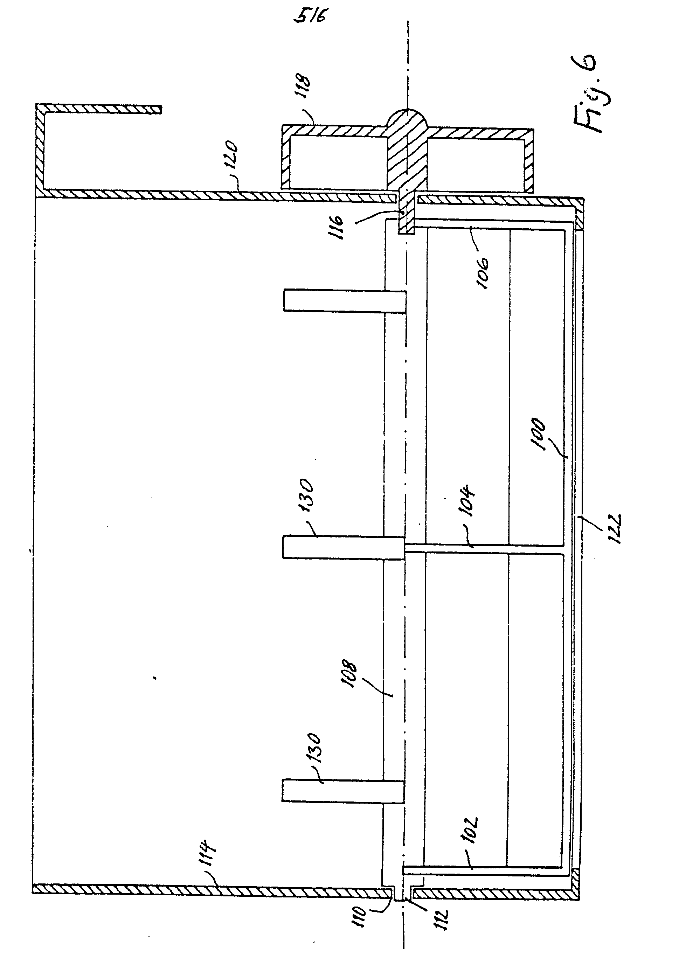

Gemäss Figur 5 und 6 ist als Verschlussglied der Schütte 74 eine im wesentlichen ebene Platte 100 vorgesehen, die mit Hilfe von senkrecht zu der Platte verlaufenden Wangen 102, 104, 106 an einer Welle 108 befestigt ist. Die Welle 108 tritt an einem Ende mit einem vorspringenden Zapfen 110 in eine Bohrung 112 der Rückwand 114 ein und weist am anderen Ende eine nicht bezeichnete Bohrung auf, in die ein Zapfen 116 eintritt, der von einem Drehgriff 118 ausgeht und die vordere Wand 120 der Schütte in einer nicht bezeichneten Bohrung durchläuft. Auf diese Weise ist die Welle 108 in etwa einem Drittel der Höhe der Schütte drehbar gelagert.

Im Boden 96 der Schütte 74 befindet sich eine Öffnung 122, die durch die Platte 100 in der in Figur 5 gezeigten Stellung abgedeckt wird. Die Platte 100 ist an ihren beiden unteren seitlichen Längskanten 124, 126 verhältnismässig scharfkantig, ggf. sogar spitzwinklig ausgebildet, so dass sie bei Drehung der Welle 108 mit Hilfe des Drehgriffes 118 mit diesen Längskanten 124, 126 über die im unteren Bereich kreisbogenförmige Bodenfläche des Bodens 96 schaben. Dadurch wird das im Behälter vorhandene Material vom Boden abgestreift, und es wird eine Verklemmung durch Zusammenbacken des Materials und das Entstehen von knirschenden Geräuschen bei körnigem Material verhindert.

An der Welle 108 sind im übrigen Flügel 128, 130 befestigt, die radial zu der Welle 108 verlaufen und auf das in der Schütte 74 enthaltene Material eine Rührbewegung ausüben.

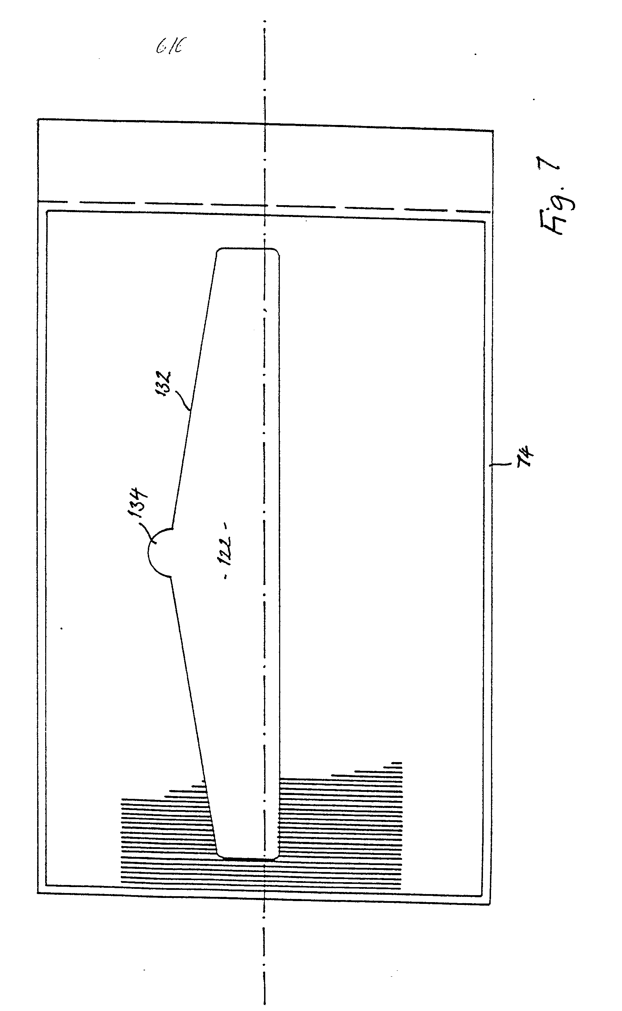

Figur 7 zeigt eine Draufsicht auf den Boden 96 der Schütte 74 von oben. Es ist ersichtlich, dass die Öffnung langgestreckt und in Querrichtung der Schütte aussermittig angeordnet ist. Die in Figur 7 obenliegende Längskante 132 ist nach aussen geknickt, so dass sich die Länge der Öffnung nach oben in Figur 7 verkürzt. Am in der Mitte liegenden Knickpunkt ist zudem eine halbkreisförmige Ausnehmung 134 vorgesehen. Diese Gestaltung der Öffnung 122 ermöglicht eine Feindosierung des Materials.

**Patentansprüche**

1. Küchenschütten-Satz mit mehreren nebeneinander angeordneten Schütten mit Auslassventilen (58; 100, 122) im Boden (28, 96) der Schütten (12, 14, 16, 18, 20; 74) und mit einer unterhalb der Schütten angeordneten und entlang der Reihe der Schütten verschiebbaren Wägeeinrichtung (30; 76, 78) mit zu den Auslassventilen (58; 100, 122) geöffnetem Wägebehälter (36, 76), dadurch gekennzeichnet, dass die Wägeeinrichtung (30) ein hängend an den Schütten (12, 14, 16, 18, 20) verschiebbar befestigtes Gehäuse (32) aufweist, das den Wägebehälter (36) frei auf einer Waage (34) stehend herausnehmbar aufnimmt.

2. Küchenschütten-Satz nach Anspruch 1, dadurch gekennzeichnet, dass am Boden der Schütten (12 bis 20) miteinander fluchtende Führungen (52) ausgebildet sind, die mit entsprechenden Führungen an der oberen Seite des Gehäuses (32) zusammenwirken.

3. Küchenschütten-Satz nach Anspruch 2, dadurch gekennzeichnet, dass die Führungen (52) an der Unterseite der Schütten nach innen vorspringende Flansche an Verlängerungen der vorderen und hinteren Wand (48, 50) der Schütten umfassen, und dass an der oberen Seite des Gehäuses (32) entsprechende, nach aussen vorspringende, die Flansche der Schütten hintergreifende Flansche ausgebildet sind.

4. Küchenschütten-Satz nach einem der vorhergehenden Ansprüche, dadurch gekennzeichnet, dass das Auslassventil (58) ein in einer Rinne (64) im Boden (28) der Schütte liegendes, mit der Wand der Rinne in dichtender Berührung stehendes, um seine Längsachse drehbares Rohr (60) umfasst, dessen Umfangswand im wesentlichen gegenüberliegende Aussparungen (66, 68) aufweist und dass im Boden der Rinne (64) in der axialen Position der Aussparungen (66, 68) eine Öffnung (70) vorgesehen ist.

5. Küchenschütten-Satz gemäss dem Oberbegriff des Anspruchs 1, dadurch gekennzeichnet, dass die Halterung (80) des Küchenschütten-Satzes eine Rückwand (82) aufweist, in deren unterem Bereich eine waagerechte Schiene (86) ausgebildet ist, in der eine Trägerplatte (90) zur Aufnahme der Waage (78) und über diese des Wägebehälters (76) verschiebbar geführt ist.

6. Küchenschütten-Satz nach Anspruch 5, dadurch gekennzeichnet, dass am oberen Rand der Rückwand (82) eine waagerecht vorspringende Abdeckplatte (92) vorgesehen ist, an deren Unterseite die Schütten (74) lösbar aufgehängt sind.

7. Küchenschütten-Satz nach Anspruch 5, dadurch gekennzeichnet, dass von der Rückwand (82) waagerechte Zapfen (94) vorspringen, auf denen die Schütten (74) herausnehmbar abgestützt sind.

8. Küchenschütten-Satz nach einem der Ansprüche 1 bis 3 und 5 bis 7, dadurch gekennzeichnet, dass das Auslassventil eine langgestreckte Öffnung (122) in einem unteren, bogenförmig ausgebildeten Bereich des Bodens (96) der Schütten (74) sowie eine die Öffnung (122) verschliessende, im wesentlichen ebene Platte (100) umfasst, deren untere Längskanten (124, 126) scharfkantig ausgebildet sind und die an einer drehbaren, die Schütte durchlaufenden Welle (108) befestigt ist.

9. Küchenschütten-Satz nach Anspruch 8, dadurch gekennzeichnet, dass an der Welle (108) Flügel (128, 130) zur Ausübung einer Rührwirkung in dem durch die Schütte aufgenommenen Material vorgesehen sind.

Revendications

1. Aménagement de bac-distributeurs pour cuisine comprenant des bac (12; 14; 16, 18; 20; 74) contigüs dont le fond (28; 96) est équipé d'un distributeur (58; 100, 122) et sous lesquels est disposé un dispositif de pesage (30; 76, 78) monté de manière à pouvoir y coulisser et pourvu d'un godet de pesée (36, 76) ouvert en direction des distributeurs (58; 100, 122) caractérisé en ce que le dispositif de pesage (30) comprend un boîtier (32) suspendu aux bacs (12, 14, 16, 18, 20) et monté coulissant de manière que le godet de pesée (36) reposant sur une balance (34) puisse être pris.

2. Aménagement suivant la revendication 1, caractérisé en ce que les fonds de bacs (12 à 20) portent des guides (52) alignés les uns avec les autres qui coopèrent avec des guides correspondants de la face supérieure.du boîtier (32).

3. Aménagement suivant la revendication 2, caractérisé en ce que les guides (52) de la face inférieure des bacs comportent des rebords saillants vers l'intérieur sur des prolongements de leurs parois antérieure et postérieure (48, 50) et en ce que la face supérieure du boîtier (32) portent des rebords correspondants saillants vers l'extérieur qui coopèrent avec les rebords des bacs.

4. Aménagement selon l'une quelconque des revendications précédentes, caractérisé en ce que le distributeur (58) comprend un tube (60) qui est monté mobile en rotation suivant son axe et ajusté à la paroi d'une gouttière (64) où il repose du fond (28) d'un bac et dans la périphérie duquel sont ménagés des évidements (66, 68) opposés et en ce que le fond de la gouttière (64) présente une ouverture (70) dans l'axe des évidements (66, 68).

5. Aménagement suivant le préambule de la revendication 1, caractérisé en ce que le support (80) de l'aménagement comprend une paroi postérieure (82) à la partie inférieure de laquelle est monté un rail (86) horizontal qui sert au guidage d'un plateau support (90) pour une balance et au coulissement du godet de pesée (76).

6. Aménagement suivant la revendication 5, caractérisé en ce que le bord supérieur de la paroi postérieure (82) porte un couvercle (92) horizontal amovible sous lequel sont suspendus de manière interchangeable les bacs (74).

7. Aménagement suivant la revendication 5, caractérisé en ce que la paroi postérieure (82) porte des tiges (94) horizontales proéminentes qui supportent de manière mobile les bacs (74).

8. Aménagement suivant l'une des revendications 1 à 3 et 5 à 7, caractérisé en ce que le distributeur comprend une ouverture (122) allongée dans une zone inférieure courbe du fond (96) du bac (74) ainsi que pour clore cette ouverture (122) une plaque (100) pratiquement plane dont les grands côtés inférieurs (124, 126) présentent un bord effilé et qui est assujettie à un axe rotatif (108) traversant le bac.

9. Aménagement suivant la revendication 8, caractérisé en ce que l'axe (108) porte des aubes (128, 130) pour agiter le produit prélevé du bac.

Claims

1. A kitchen dispensing device comprising a plurality of dispensing vessels arranged side by side and having outlet valves (58; 100, 122) in the bottom (28, 96) of the dispensing vessels (12, 14, 16, 18, 20; 74), and weighing means (30; 76, 78) arranged below said dispensing vessels and being slidable along the row of said dispensing vessels, said weighing means having a weighing receptacle (36, 76) open to said outlet valves (58; 100, 122), characterized in that said weighing means (30) comprise a housing (32) that is slidably suspended from said dispensing vessels (12, 14, 16, 18, 20) and removably receives said weighing receptacle (36) which stands on a balance (34).

2. A kitchen dispensing device according to claim 1, characterized in that aligned guide means (52) are formed on the bottom of the dispensing vessels (12 to 20), said guide means cooperating with corresponding guide means on the upper side of the housing (32).

3. A kitchen dispensing device according to claim 2, characterized in that said guide means (52) comprise inwardly projecting flanges on the bottom side of the dispensing vessels, said flanges projecting from extensions of the front and rear walls (48, 50) of the dispensing vessels, and in that corresponding outwardly projecting flanges, that engage on the flanges of the dispensing vessels, are provided on the upper side of the housing (32).

4. A kitchen dispensing device according to any of the preceding claims, characterized in that said outlet valve (58) comprises a pipe (60) received in a channel (64) formed in the bottom (28) of the dispensing vessel, the pipe being rotatable along its longitudinal axis and sealingly engaging the wall of the channel, the circumferential wall of the pipe being provided with substantially opposing recesses (66, 68), and in that an opening (70) is provided in the bottom of the channel (64) in the axial position of the recesses (66, 68).

5. A kitchen dispensing device according to the precharacterizing part of claim 1, characterized in that the holder (80) for the dispensing device has a rear wall (82) which is formed with a horizontal rail (86) in the lower portion thereof, a carrier plate (90) for supporting the balance (78) and hence the weighing receptacle (76) being slidably guided in said rail.

6. A kitchen dispensing device according to claim 5, characterized in that a horizontally projecting cover plate (92) is provided at the upper edge of the rear wall (82), the dispensing vessels (74) being detachably suspended from the bottom side of said cover plate.

7. A kitchen dispensing device according to claim 5, characterized by horizontal pins (94) projecting form the rear wall (82), the dispensing vessels (74) being removably supported on said pins.

8. A kitchen dispensing device according to any of the claims 1 to 3 and 5 to 7, characterized in that said outlet valve comprises an elongate opening (122) formed in a lower, arcuate portion of the bottom (96) of the dispensing vessels (74), and a substantially flat plate (100) for closing said opening (122), said plate having knife-edge shaped lower longitudinal edges (124, 126) and being fixed to a rotatable shaft (108) passing through the dispensing vessel.

9. A kitchen dispensing device according to claim 8, characterized in that said shaft (108) is provided with blades (128, 130) for agitating the material contained in the dispensing vessel.

Fig. 1

0 130 525

Fig. 2

Fig. 3

3/6

Fig. 4

Fig. 5

0 130 525

5/6

Fig. 6

Fig. 7

0 130 525